# EUROPEAN PATENT SPECIFICATION

(11) **EP 3 939 141 B1**
(45) Date of publication and mention of the grant of the patent: **12.11.2025**
(21) Application number: 20753806.7
(22) Date of filing: 17.07.2020
(51) Int. Cl.: H02J 7/00, B60L 53/30, B60L 53/53, B64U 50/34

(54) **CONTACT BASE FOR RECHARGING ENERGY ACCUMULATORS OF MOBILE DEVICES IN OUTSIDE ENVIRONMENTS**
KONTAKTSOCKEL ZUM WIEDERAUFLADEN VON ENERGIESPEICHERN VON MOBILEN VORRICHTUNGEN IN AUSSENUMGEBUNGEN
BASE DE CONTACT POUR RECHARGER DES ACCUMULATEURS D'ÉNERGIE DE DISPOSITIFS MOBILES DANS DES ENVIRONNEMENTS EXTÉRIEURS

(30) Priority: 19.07.2019 IT 201900002466 U
(43) Date of publication of application: 19.01.2022
(73) Proprietor: Skycharge GmbH, 10437 Berlin (DE)
(72) Inventor: PUIATTI, Leo, 38122 Trento (IT)
(74) Representative: Muraro, Alfeo Federico
(86) International application number: PCT/IB2020/056749
(87) International publication number: WO 2021/014311

(56) References cited:
- WO-A1-2007/099412
- US-A1- 2005 139 383
- US-A1- 2016 336 772
- US-A1- 2018 057 165

## Description

### Field of application

The present invention belongs to the field of the systems for charging the electric energy accumulators used for power supply of mobile devices such as, for example, aerial vehicles (UAV) or ground vehicles (UGV).

### State of the Art

Stationary systems for recharging accumulators of mobile devices use the following techniques:
- manual or automated connection of a power supply cable;
- automated replacement of the batteries, possibly with mechanical positioning of the mobile device;
- displacement of the mobile device towards fixed charging contacts;
- displacement charging contacts towards the mobile device;
- displacement of a single charging contact towards the mobile device;
- systems for positioning the mobile device, provided with fixed forced guides;
- charging through conductive surfaces and multiple electric contacts on the support base of the mobile device;
- charging through magnetic induction.

Some of the aforementioned techniques allow to operate in environments where humidity or rain is present, but they need moving mechanisms or parts, or they have restrictive limits in the power that can be supplied.

In particular, the recharging systems acting through the contact between a stationary base and a mobile device stationing on the base, having contacts arranged on the surface of the base itself, if exposed to the outside atmospheric agents may originate electrolysis events during the process of recharging the accumulators when an electric potential difference is applied between the contacts.

It is an aim of the present execution to improve the recharging techniques that involve contacts between the base and the mobile device, and without moving parts, in order to allow operability in outside environments or in the presence of humid or saline atmosphere.

Document US 2018/057165 A1 discloses a system for recharging remotely controlled aerial vehicle.

### Presentation of the Invention

The proposed solution is solved through claims from 1 to 15 in which variants and benefits of the inventive solution are defined.

The bases for the recharging of accumulators through contacts have different shapes and ways of operation. The present solution is applicable to bases having contact areas and insulating gaps between the contacts that lay on the same plane or are substantially co-planar. The operative context into which the present execution falls is constituted of a base for the supply of electric energy through multiple contacts arranged on a plane surface and having, for example when using direct current, different electric polarities; the mobile device to which the energy is supplied is provided with contact poles that touch the contacts of the base when the device is positioned on the base itself.

The ways through which the contact is achieved are different according to the kinds of the base, of the connections of the contacts of the base with the power supply apparatus and of the control of the energy transfer towards the accumulators installed on board of the mobile device.

For example, the base to which the present solution is applicable may be made having a tessellation of square or hexagonal electrically conductive contacts or through parallel conductive bands arranged on the same plane together with the material used for electric insulation between the contacts.

For the sake of illustrating the present solution, considering two contacts of the base with different values of electric potential mutually insulated through non conductive materials will suffice. The presence of rainwater or other fluids on the plane of the base may generate a conductive channel between the two contacts of the base among which a difference of electric potential is present and triggers phenomenons in which electric energy is transformed into chemical energy with degenerative and potentially dangerous consequences on the materials due to the creation, for example in the event of electrolysis of water, of gaseous hydrogen and oxygen.

In order to prevent or limit the above phenomenon, a base is organized in turrets, made with electrically non conductive material, at the top of which the electric contacts used for the supply of energy are arranged.

As a consequence, a separation through air is defined between the electric contacts that supply energy, obtaining high values of electrical insulation between the contacts of the base. As a consequence, fluids that are possibly present on the base are drained in the channels defined between the turrets and are not in direct contact with the contacts of the base to which the difference of electric potential is applied.

Due to the lack of continuity of the plane of the base caused by the presence of the drain channels, the contact poles of the mobile device shall fulfill geometrical requirements to put them in relation with the dimensions of the contacts of the base and of the insulation gaps between the contacts of the base. The above geometrical correlation is aimed at ensuring that a certain contact is established between the contact poles of the mobile device and the contacts on the base, when the mobile device is correctly positioned on the recharging base. For example: the dimension of the contact area of the contacts of the mobile device shall be bigger than the insulation distance between the contacts of the base or, in another example, the number of contacts of the mobile device shall be such as to ensure the contact with different contacts of the base in at least two points.

The ability to operate in presence of fluids will be dependent upon the dimensions and the shape of the gaps interposed between the contacts of the base, the slope of the channels, the materials used, the kind and quantity of fluids that can be present on the base.

For example, in the event of heavy rains, the drainage of the channels might be insufficient, hence the operation would be compromised.

Nevertheless, such events are generally temporary and involves a limited stop, moreover during such events the mobile devices such as autonomously piloted drones (UAV) are generally inoperative.

To obviate to the possible temporary events above mentioned, and in order to achieve a complete automation of the processes of charging the accumulators of the mobile devices, it is possible to adopt design features for temporarily suspend the energy supply when electrolysis phenomenons are detected for example by measuring external impedances, or currents, at predefined thresholds. In case of atmospheric events such as snow or ice the base might be provided with heating systems suited to limit the consequences. For operating in extreme climate environment conditions, the bases are housed inside protective structures.

The solution allows to significantly extend the operability of the stationary bases for charging accumulators through contacts between base and contact poles of the mobile device. In most cases it allows performing the energy transfer in outside environments, hence limiting downtimes to few exceptional events.

The solution is applicable to several variants as for shape, dimensions and insulating materials in order to be adapted to the different existing kinds of systems for charging the accumulators of mobile devices operating by contact.

The main advantages of the solution are:
- operation in environments with humid, saline or rainy atmosphere;
- the applicability to several kinds of recharging bases;
- the independence from the kind of mobile device;
- the efficient energy transfer because there are no limits to the current that can be transported or to the voltage that can be applied;
- the dimensional scalability and the flexibility to adapt to different constructive versions for specific needs;
- the absence of moving mechanical parts and the low manufacturing cost.

### Description of the drawings

Hereinafter the illustrative drawings referenced in the "Description of the execution" are described. The mobile device referenced in the drawings is an unmanned aerial vehicle (UAV), but it may be a different kind of mobile device. The features and advantages of the present invention are described with reference to a practical execution which is represented by way of non limiting example in the attached drawings, in which:
- Figure 1 represents the perspective view of the base;
- Figure 2 represents a view of a side of the base;
- Figure 3 represents a top view of the plane of the base without the installed contacts;
- Figure 4 represents a bottom view of the plane of the base without the installed contacts;
- Figure 5 represents a lateral cross section of the base;
- Figure 6 represents a detail of the lateral cross section of the base with one turret and one contact;
- Figure 7 represents a detail of the lateral cross section of the base with one turret without the installed contact;
- Figure 8 represents a contact of the base with the corresponding connection cable provided with slot and fixation bolt;
- Figure 9 represents a perspective view of a mobile device constituted of an autonomously driven drone (Unmanned Aerial Vehicle) whose electric contact poles are installed on the support foot;
- Figure 10 represents a detail of the support foot of the autonomously driven drone having two electric contact poles.

The elements of the figures are represented in order to simplify the understanding of the text and are not necessarily represented in scale. For example the relative dimensions or positions of some elements in the figures might be exaggerated compared to other elements to improve understanding of the different possible embodiments through the present invention. Moreover, common and well known elements of the technique, needed for commercial manufacturing, might not be described or represented in order to simplify and clarify the context of the invention. Certain actions or passes might be described or represented in a particular order, yet being understandable to experts in the field. The terms and expression used have the meaning commonly used in the technique by expert technicians, except where different specific meanings are specified.

### Description of the execution

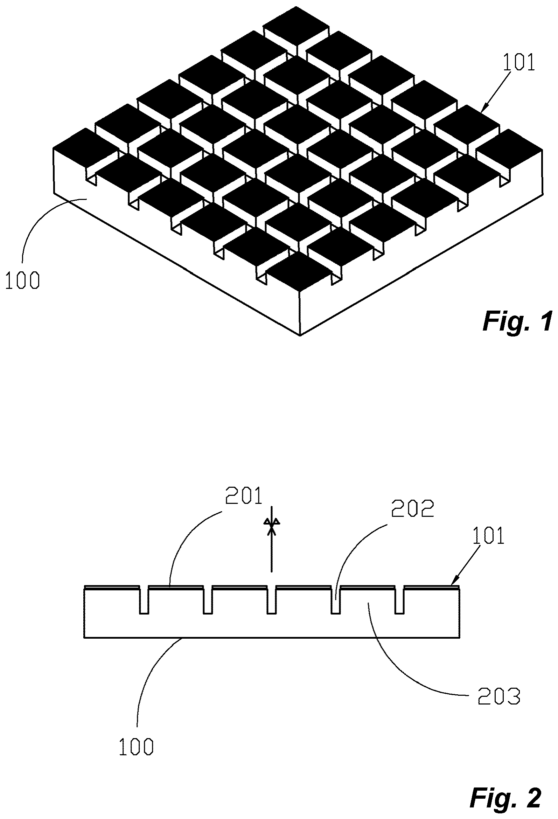

The execution consists of a base **100** constituted of a tessellation of electrically conductive contacts **201** positioned on top of electrically insulating supports as shown in Figure 1.

As previously anticipated, the contacts **201** lay on the same plane **101** or are substantially co-planar on said plane.

Contacts **201** of the base **100** are positioned on top of turrets **203** made in electrically insulating material.

Turrets **203** are mutually separated by an air gap **202** having dimensions that are appropriate for the purpose to drain fluids that may be present on the base and preventing electrolysis phenomenons when a difference of electric potential is established between two mutually close contacts **201.**

As evidenced in figure 1, by applying the above separation between the turrets **203,** fluids drainage channels are defined that allow the base **100** to operate also during rains, based on the insulation distances that are used and on the capability of the channels to drain the fluids. The dimensions and slope of the channels, the kind of the materials and their behavior in contact with the different fluids, the executive shape of the details, may be whatever in order to optimize the drainage of the fluids and to adapt to the kinds of contact systems used by the mobile devices.

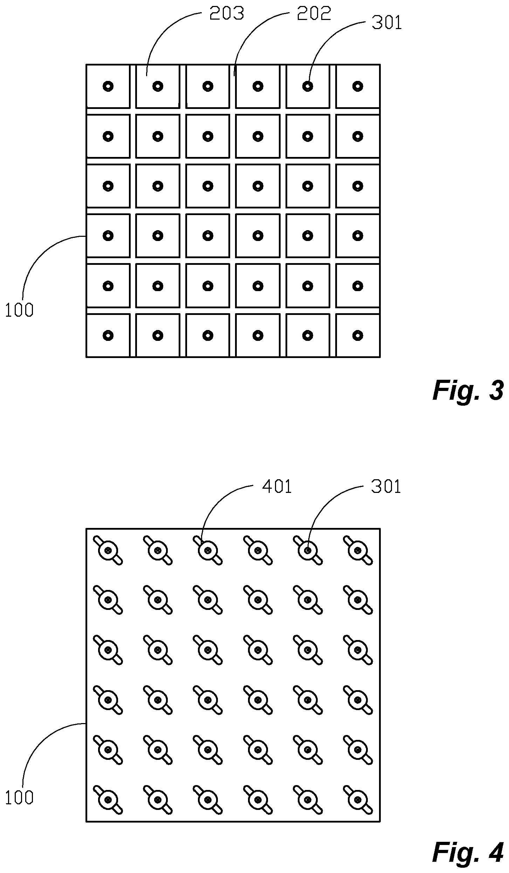

In order to ensure perfect tightness to water the turret supports **203** are made through machining from solid of a plate in electrically insulating, low hygroscopicity material, for example PVC. As shown in figures from 3 to 7, holes **301** are made on the machined plate in correspondence of the center of the turrets **203.** On the underside of the plate, as evidenced in figure 4 and following, the holes **301** are shaped to allow an easy insertion of the terminals **502** of the electric cables **501** that connect the contacts **201** with the electrical power supply and the control apparatuses of the base (not shown).

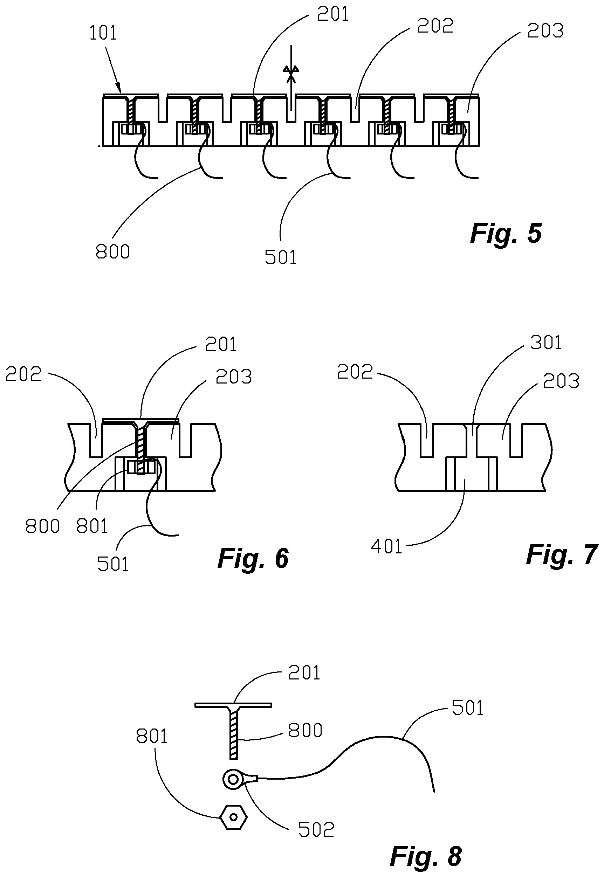

The contacts **201** of the base **100** are made in a material that is electrically conductive, resistant to abrasions and to atmospheric agents, for example stainless steel sheet or brass alloys. In the shown embodiment the contact **201** has a square shape, and under the contact a fixing screw **800** is welded as shown in figure 8. The contact **201** is positioned on the turret **203** with the screw **800** inserted into the hole **301.** The screw **800** is connected to the terminal **502** of the electric cable **501** for connection towards the electric power supply and control apparatuses of the base (not represented), as illustrated in figures 5 and 6.

Using the embodiment shown in Figures from 1 to 8 it is not necessary to implement specific design features, glues, "o-ring" sealing rings, or silicone sealants to ensure waterproofing of the bottom part of the base **100** that houses the electric connections towards the electric power supply and control apparatuses, because: cables **501** are connected to the contacts **201** of the base within cavities **401** made inside the insulating-material plate of the base, and the contacts **201** prevent fluids from entering thanks to their shape that covers the hole **301** and to the adherence achieved as a consequence of the pressure of the contact **201** when this is fixed to turret **203** through the bolt **801.**

According to a variant arrangement not part of the method claimed in claim 14 and not shown in the drawings, the turrets **203** may be mutually distinct elements, i.e. obtained separately, that are subsequently laid on a support of any kind, being it insulating or conductive. It is clear that what has been described so far may be applicable to this variant embodiment as well, with the due and obvious changes.

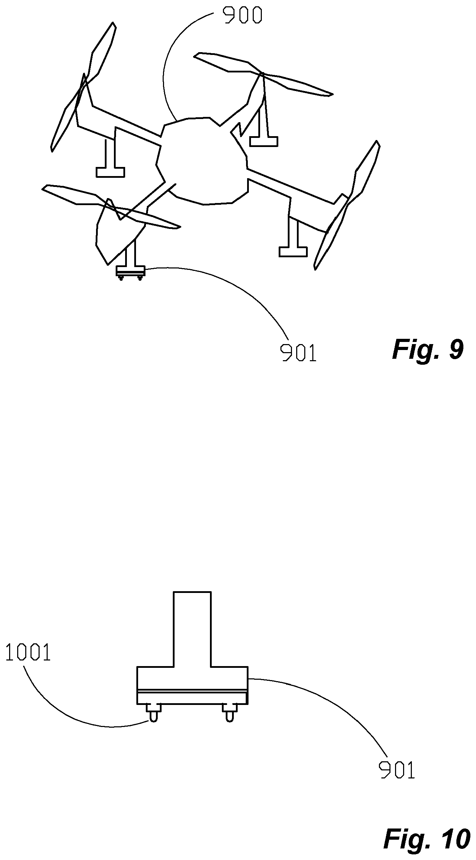

In order to use the base **100** as an electric power supply source, the mobile devices **900** are provided with contact poles whose geometrical dimensions shall be correlated to the dimensions of the contacts and of the insulation gap. For example, with reference to figures 9 and 10, and in the event that the number of contact poles **1001** installed on the contact foot **901** of the mobile device **900** is two, the following geometrical relations will occur:
- the contact dimension of each contact pole **1001** of the mobile device **900** shall be bigger than the insulation distance between two contacts **201** of the base **100,** in order to prevent a contact pole of the mobile device from being positioned in the insulation gap **202** between the contacts of the base;
- the distance between the two contact poles **1001** of the mobile device **900** shall be bigger than the diagonal of the square of a contact **201** of the base **100** in order to ensure that the two contact poles of the mobile device don't touch the same contact of the base.

It is underlined that the above contact dimension of each contact pole **1001** is the dimension of the area on which the contact pole **1001** insists when it lays on the plane **101** of the base **100.** More precisely, a contact pole **1001** constituted of a single contact body, as in figure 10, has a contact area that that coincides with the cross section of the above contact body. On the other hand, a contact pole comprising more contact bodies, of the kind not shown in the drawings, defines a contact area that corresponds to a polygon whose vertices correspond to the contact bodies. In the latter case, the contact area is the area of the above polygon, and not the sum of the cross sections of the contact bodies.

In another embodiment, in which the number of contacts **1001** of the mobile device **900** is bigger than two, the dimensional geometrical correlations between the contacts and the insulation gaps **202** of the base **100** and the contact poles of the mobile vehicle, shall be suitably defined for each specific configuration.

In another embodiment the dimensions and the slope of the channels, the kind of materials and their behavior in contact with different fluids, the executive shape of the details that foster the drain of the fluids, may be different with respect to the illustrated example, as well as the dimensions and the shape of the contacts **201** of the base **100,** the mode used for fixing the contacts to the base and the electrical connections of the electrical power supply and control apparatuses of the base. In all cases, a separation gap **202** in air or non conductive atmosphere is kept between the contacts.

In another embodiment the cables **501** for connection towards the electrical power supply and control apparatuses of the base **100** are replaced by printed circuit boards (PCB) having conductive traces whose thickness shall be adequate to support the required currents.

### Advantages and industrial use of the solution

The salient aspects of the present solution are:
- the operation in humid, saline or rainy environments;
- the independence of the contact system from the kind of mobile vehicle;
- the efficient energy transfer, since there are no limits in the current that can be transported or in the voltage that can be applied;
- the dimensional scalability and the flexibility to adapt to different embodiments for specific needs;
- the absence of moving parts and the low manufacturing cost.

The field to which the solution is intended to be used does not require that a base for charging accumulators is capable to operate in whatever atmospheric condition, hence the proposed solution is advantageous and allows to improve solutions that otherwise could only operate in internal environments or in environments that are protected from the atmospheric agents.

The industrial use of the present executive solution in a base to supply electric energy for recharging accumulators in a mobile device is applicable, in a simple way and with low costs, to outdoor recharging stations arranged in public or private areas for servicing devices fleet operating through energy sources provided by accumulators, such as for example:
- aerial vehicles (e.g. UAV);
- ground vehicles (e.g. UGV);
- robots;
- industrial handling systems.

## Claims

1. A system for recharging an electric energy accumulator of an energy-absorber mobile device (900) provided with a multiplicity of electrical contact poles (1001), said system comprising a base (100) to supply electric energy, said base (100) being constituted of a multiplicity of mutually electrically insulated electric contacts (201) that define a contact plane (101) for contacting said electrical contact poles (1001) when said mobile device (900) is stationing on said base (100) so that said mobile device (900) absorbs energy from said base (100), wherein said system comprises turrets (203) made in electrically insulating material, **characterized in that** said electric contacts (201) are arranged on top of said turrets (203) and are mutually separated through separation gaps (202) in air or in an atmosphere that is electrically non conductive or has a negligible electrical conductivity, said turrets (203) being mutually separated through said separation gaps (202), wherein said separation gaps (202) define corresponding channels for draining fluids.

2. A system according to claim 1 **characterized in that** said channels are such that fluids present on the base are drained in said channels and are not in direct contact with said electric contacts to which the difference of electric potential is applied.

3. A system according to any claims 1 or 2 **characterized in that** said channels have a slope suited to foster said draining.

4. A system according to any one of the preceding claims **characterized in that** said turrets (203) are shaped as a polyhedral solid or as a solid of revolution.

5. A system according to any one of the preceding claims **characterized in that** said electric contacts (201) have a contact surface constituted by a polygonal, curved, plane or three-dimensional geometrical profile.

6. A system according to any one of the preceding claims **characterized in that** it is configured such that it temporarily suspends the energy supply towards said electric contacts (201) when detecting electrolysis phenomenons between said electric contacts (201).

7. A system according to any one of the preceding claims **characterized in that** said base (100) comprises a heating system suited to limit the consequences of snow or ice.

8. A system according to any one of the preceding claims **characterized in that** said turrets (203) belong to a plate in electrically insulating and low hygroscopicity material.

9. A system according to any one of the preceding claims **characterized in that** each one of said turrets (203) comprises a hole (301) in correspondence of its center for inserting a screw (800) welded on the underside of a corresponding one of said electric contacts (201), a terminal (502) of an electrical connection cable (501) for the electric supply and the control of said base (100) being connected to said screw (800).

10. A system according to claim 9 **characterized in that** it comprises a support element for supporting said turrets (203), said support element comprising a cavity (401) made inside it in correspondence of each turret (203) on the side of said support element that is opposite to said turret (203) for connecting a corresponding electrical connection cable (501) to a corresponding one of said electric contacts (201).

11. A system according to any claims 9 or 10 **characterized in that** it comprises a bolt (801) for fixing each one of said electric contacts (201) to the corresponding turret (203).

12. A system according to any one of the preceding claims **characterized in that** it comprises said mobile device (900) **and in that,** between said contact poles (1001) of said mobile device (900) and said electric contacts (201) of said base (100) with the corresponding insulation gaps (202), such a geometrical correlation exists as to ensure that at least two or more electric contact poles (1001) are in contact, respectively, with two or more mutually distinct of said electric contacts (201) when said mobile device (900) is positioned on said base (100).

13. A system according to any one of the preceding claims **characterized in that** it comprises said mobile device (900) **and in that** the dimension of the contact area of each one of said electric contact poles (1001) is bigger than the insulation distance between said electric contacts (201).

14. Method to make a system according to any claims from 1 to 11 **characterized in that** it comprises the operations of making said turrets (203) by machining from solid of a plate in electrically insulating and low hygroscopicity material and providing said electric contacts (201) arranged on top of said turrets (203).

15. Method according to claim 14 **characterized in that** it comprises the operation of making holes (301) in said machined plate in correspondence of the center of said turrets (203), said holes (301) being shaped, on the side of said plate opposite to said turrets (203), in order to ease the insertion of corresponding terminals (502) of electric cables (501) for the connection of said electric contacts (201) to supply and control apparatuses.

## Patentansprüche

1. System zum Wiederaufladen eines elektrischen Energiespeichers einer energieabsorbierenden mobilen Vorrichtung (900), die mit einer Vielzahl von elektrischen Kontaktpolen (1001) versehen ist, wobei das besagte System eine Basis (100) zum Versorgen mit elektrischer Energie umfasst, wobei die besagte Basis (100) aus einer Vielzahl von gegenseitig elektrisch isolierten elektrischen Kontakten (201) besteht, die eine Kontaktebene (101) zum Kontaktieren der besagten elektrischen Kontaktpole (1001) definieren, wenn die besagte mobile Vorrichtung (900) auf der besagten Basis (100) stationiert ist, sodass die besagte mobile Vorrichtung (900) Energie von der besagten Basis (100) absorbiert, wobei das besagte System Aufbauten (203) aus elektrisch isolierendem Material umfasst, **dadurch gekennzeichnet, dass** die besagten elektrischen Kontakte (201) oben auf den besagten Aufbauten (203) angeordnet sind und durch Trennspalte (202) in der Luft oder in einer Atmosphäre, die nicht elektrisch leitfähig ist oder eine vernachlässigbare elektrische Leitfähigkeit aufweist, voneinander getrennt sind, wobei die besagten Aufbauten (203) durch die besagten Trennspalte (202) voneinander getrennt sind, wobei die besagten Trennspalte (202) entsprechende Kanäle zum Ableiten von Flüssigkeiten definieren.

2. System nach Patentanspruch 1, **dadurch gekennzeichnet, dass** die besagten Kanäle so beschaffen sind, dass auf der Basis vorhandene Flüssigkeiten in den besagten Kanälen abgeleitet werden und nicht in direktem Kontakt mit den besagten elektrischen Kontakten stehen, an die die elektrische Potentialdifferenz angelegt wird.

3. System nach jeglichem der Patentansprüche 1 oder 2, **dadurch gekennzeichnet, dass** die besagten Kanäle eine Neigung aufweisen, die dazu geeignet ist, das besagte Ableiten zu fördern.

4. System nach jeglichem der vorhergehenden Patentansprüche, **dadurch gekennzeichnet, dass** die besagten Aufbauten (203) als polyedrische Festkörper oder als Rotationsfestkörper geformt sind.

5. System nach jeglichem der vorhergehenden Patentansprüche, **dadurch gekennzeichnet, dass** die besagten elektrischen Kontakte (201) eine Kontaktfläche aufweisen, die aus einem vieleckigen, gekrümmten, ebenen oder dreidimensionalen geometrischen Profil besteht.

6. System nach jeglichem der vorhergehenden Patentansprüche, **dadurch gekennzeichnet, dass** es so konfiguriert ist, dass es die Energieversorgung für die besagten elektrischen Kontakte (201) vorübergehend unterbricht, wenn Elektrolysephänomene zwischen den besagten elektrischen Kontakten (201) erfasst werden.

7. System nach jeglichem der vorhergehenden Patentansprüche, **dadurch gekennzeichnet, dass** die besagte Basis (100) ein Heizsystem umfasst, das dazu geeignet ist, die Auswirkungen von Schnee oder Eis zu begrenzen.

8. System nach jeglichem der vorhergehenden Patentansprüche, **dadurch gekennzeichnet, dass** die besagten Aufbauten (203) zu einer Platte aus elektrisch isolierendem und wenig hygroskopischem Material gehören.

9. System nach jeglichem der vorhergehenden Patentansprüche, **dadurch gekennzeichnet, dass** jeder der besagten Aufbauten (203) Folgendes umfasst: ein Loch (301) in Übereinstimmung mit seiner Mitte zum Einsetzen einer Schraube (800), die an der Unterseite eines entsprechenden der besagten elektrischen Kontakte (201) verschweißt ist, einen Anschluss (502) eines elektrischen Verbindungskabels (501) für die elektrische Versorgung und die Steuerung der besagten Basis (100), die mit der besagten Schraube (800) verbunden ist.

10. System nach Patentanspruch 9, **dadurch gekennzeichnet, dass** es ein Stützelement zum Stützen der besagten Aufbauten (203) umfasst, wobei das besagte Stützelement einen Hohlraum (401) umfasst, der in seinem Inneren in Übereinstimmung mit jedem Aufbau (203) auf der Seite des besagten Stützelements ausgebildet ist, die dem besagten Aufbau (203) gegenüberliegt, um ein entsprechendes elektrisches Verbindungskabel (501) mit einem entsprechenden der besagten elektrischen Kontakte (201) zu verbinden.

11. System nach jeglichem der Patentansprüche 9 oder 10, **dadurch gekennzeichnet, dass** es einen Bolzen (801) zum Befestigen jedes der besagten elektrischen Kontakte (201) am entsprechenden Aufbau (203) umfasst.

12. System nach jeglichem der vorhergehenden Patentansprüche, **dadurch gekennzeichnet, dass** es die besagte mobile Vorrichtung (900) umfasst **und dass** zwischen den besagten Kontaktpolen (1001) der besagten mobilen Vorrichtung (900) und den besagten elektrischen Kontakten (201) der besagten Basis (100) mit den entsprechenden Isolationsspalten (202) eine solche geometrische Korrelation besteht, um sicherzustellen, dass mindestens zwei oder mehrere elektrische Kontaktpole (1001) jeweils mit zwei oder mehreren voneinander verschiedenen der besagten elektrischen Kontakte (201) in Kontakt stehen, wenn die besagte mobile Vorrichtung (900) auf der besagten Basis (100) positioniert ist.

13. System nach jeglichem der vorhergehenden Patentansprüche, **dadurch gekennzeichnet, dass** es die besagte mobile Vorrichtung (900) umfasst **und dass** die Abmessung des Kontaktbereichs jedes der besagten elektrischen Kontaktpole (1001) größer ist als der Isolationsabstand zwischen den besagten elektrischen Kontakten (201).

14. System nach jeglichem der Patentansprüche von 1 bis 11, **dadurch gekennzeichnet, dass** die besagten Aufbauten (203) durch maschinelles Bearbeiten einer Platte aus elektrisch isolierendem und wenig hygroskopischem Material hergestellt werden.

15. Verfahren zum Herstellen eines Systems nach jeglichem der Patentansprüche von 1 bis 11, **dadurch gekennzeichnet, dass** es die folgenden Vorgänge umfasst:
- Herstellen der besagten Aufbauten (203) durch maschinelles Bearbeiten einer Platte aus elektrisch isolierendem und wenig hygroskopischem Material;
- Ausführen von Löchern (301) in der besagten maschinell bearbeiteten Platte in Übereinstimmung mit der Mitte der besagten Aufbauten (203), wobei die besagten Löcher (301) auf der den besagten Aufbauten (203) gegenüberliegenden Seite der besagten Platte geformt sind, um die Einführung entsprechender Anschlüsse (502) von elektrischen Kabeln (501) für die Verbindung der besagten elektrischen Kontakte (201) mit Versorgungs- und Steuergeräten zu erleichtern.

## Revendications

1. Système de recharge d'un accumulateur d'énergie électrique d'un dispositif mobile absorbeur d'énergie (900) doté d'une multiplicité de pôles de contact électriques (1001), ledit système comprenant une base (100) pour fournir de l'énergie électrique, ladite base (100) étant constituée d'une multiplicité de contacts électriques mutuellement isolés électriquement (201) qui définissent un plan de contact (101) pour entrer en contact avec lesdits pôles de contact électriques (1001) lorsque ledit dispositif mobile (900) stationne sur ladite base (100) de sorte que ledit dispositif mobile (900) absorbe de l'énergie à partir de ladite base (100), où ledit système comprend des tourelles (203) réalisées dans un matériau électriquement isolant, **caractérisé en ce que** lesdits contacts électriques (201) sont disposés sur la partie supérieure desdites tourelles (203) et sont mutuellement séparés par des espaces de séparation (202) dans l'air ou dans une atmosphère qui est électriquement non conductrice ou qui a une conductivité électrique négligeable, lesdites tourelles (203) étant mutuellement séparées par lesdits espaces de séparation (202), où lesdits espaces de séparation (202) définissent des canaux correspondants pour l'évacuation des fluides.

2. Système selon la revendication 1, **caractérisé en ce que** lesdits canaux sont tels que les fluides présents sur la base sont évacués dans lesdits canaux et ne sont pas en contact direct avec lesdits contacts électriques auxquels la différence de potentiel électrique est appliquée.

3. Système selon l'une quelconque des revendications 1 ou 2, **caractérisé en ce que** lesdits canaux ont une pente apte à favoriser ladite évacuation.

4. Système selon l'une quelconque des revendications précédentes, **caractérisé en ce que** lesdites tourelles (203) ont la forme d'un solide polyédrique ou d'un solide de révolution.

5. Système selon l'une quelconque des revendications précédentes, **caractérisé en ce que** lesdits contacts électriques (201) ont une surface de contact constituée par un profil géométrique polygonal, courbe, plan ou tridimensionnel.

6. Système selon l'une quelconque des revendications précédentes, **caractérisé en ce qu'**il est configuré de manière à suspendre temporairement l'alimentation en énergie vers lesdits contacts électriques (201) lors de la détection de phénomènes d'électrolyse entre lesdits contacts électriques (201).

7. Système selon l'une quelconque des revendications précédentes, **caractérisé en ce que** ladite base (100) comprend un système de chauffage apte à limiter les conséquences de la neige ou de la glace.

8. Système selon l'une quelconque des revendications précédentes, **caractérisé en ce que** lesdites tourelles (203) appartiennent à une plaque en matériau électriquement isolant et peu hygroscopique.

9. Système selon l'une quelconque des revendications précédentes, **caractérisé en ce que** chacune desdites tourelles (203) comprend un trou (301) à hauteur de son centre pour l'insertion d'une vis (800) soudée sur la face inférieure d'un contact électrique correspondant parmi lesdits contacts électriques (201), une borne (502) d'un câble de connexion électrique (501) pour l'alimentation électrique et la commande de ladite base (100) étant reliée à ladite vis (800).

10. Système selon la revendication 9, **caractérisé en ce qu'**il comprend un élément de support apte à supporter lesdites tourelles (203), ledit élément de support comprenant une cavité (401) réalisée à l'intérieur de celui-ci à hauteur de chaque tourelle (203) sur le côté dudit élément de support qui est opposé à ladite tourelle (203) pour connecter un câble de connexion électrique correspondant (501) à l'un correspondant desdits contacts électriques (201).

11. Système selon l'une quelconque des revendications 9 ou 10 **caractérisé en ce qu'**il comprend un boulon (801) pour fixer chacun desdits contacts électriques (201) à la tourelle correspondante (203).

12. Système selon l'une quelconque des revendications précédentes **caractérisé en ce qu'**il comprend ledit dispositif mobile (900) **et en ce que,** entre lesdits pôles de contact (1001) dudit dispositif mobile (900) et lesdits contacts électriques (201) de ladite base (100) avec les espaces d'isolation correspondants (202), il existe une corrélation géométrique telle qu'elle garantit qu'au moins deux ou plusieurs pôles de contact électriques (1001) sont en contact, respectivement, avec deux ou plusieurs desdits contacts électriques (201) mutuellement distincts lorsque ledit dispositif mobile (900) est positionné sur ladite base (100).

13. Système selon l'une quelconque des revendications précédentes, **caractérisé en ce qu'**il comprend ledit dispositif mobile (900) **et en ce que** la dimension de la zone de contact de chacun desdits pôles de contact électriques (1001) est supérieure à la distance d'isolation entre lesdits contacts électriques (201).

14. Système selon l'une quelconque des revendications de 1 à 11, **caractérisé en ce que** lesdites tourelles (203) sont réalisées par usinage d'une plaque en matériau électriquement isolant et à faible hygroscopicité.

15. Procédé pour la réalisation d'un système selon l'une quelconque des revendications de 1 à 11, **caractérisé en ce qu'**il comprend les opérations suivantes:
- réalisation desdites tourelles (203) par usinage d'une plaque en matériau électriquement isolant et à faible hygroscopicité;
- réalisation de trous (301) dans ladite plaque usinée à hauteur du centre desdites tourelles (203), lesdits trous (301) étant galbés, sur le côté de ladite plaque opposé auxdites tourelles (203), afin de faciliter l'insertion des bornes correspondantes (502) des câbles électriques (501) pour la connexion desdits contacts électriques (201) aux appareils d'alimentation et de commande.
